# EUROPÄISCHE PATENTSCHRIFT

(11) **EP 0 865 373 B1**
(45) Veröffentlichungstag und Bekanntmachung des Hinweises auf die Patenterteilung: **22.03.2000**
(21) Anmeldenummer: 96941632.0
(22) Anmeldetag: 02.12.1996
(51) Int. Cl.: B62D 1/18

(54) **EINSTELLBARE LENKEINRICHTUNG**
ADJUSTABLE STEERING ARRANGEMENT
DIRECTION REGLABLE

(30) Priorität: 06.12.1995 DE 19545438
(43) Veröffentlichungstag der Anmeldung: 23.09.1998
(73) Patentinhaber: ZF FRIEDRICHSHAFEN Aktiengesellschaft, 88038 Friedrichshafen (DE)
(72) Erfinder: BUDAKER, Martin, D-73540 Heubach (DE); HÄGELE, Gerhard, D-73453 Hohenstadt (DE)
(86) Internationale Anmeldenummer: EP9605321
(87) Internationale Veröffentlichungsnummer: WO9720723

(56) Entgegenhaltungen:
- EP-A- 0 671 308
- WO-A-90/05082
- FR-A- 2 360 454
- GB-A- 2 107 439
- US-A- 3 504 569

## Beschreibung

Die Erfindung betrifft eine Lenkeinrichtung zur vertikalen und axialen Einstellung der Lage des Lenkrades in einem Kraftfahrzeug, mit einer Lenkspindel, die an einem fahrzeugfesten Teil axial verschiebbar und um eine horizontale Achse schwenkbar gelagert sowie durch ein Spannelement in der gewünschten Position festlegbar ist.

Eine solche Lenkeinrichtung ist zum Beispiel aus der DE 25 11 901 bekannt. Diese weist ein Lenkspindel-Oberteil mit einem Lenkrad auf, das in einer Hülse drehbar, aber axial unverschiebbar gehalten ist. Das Lenkspindel-Oberteil ist über ein Kardangelenk mit einem als Teleskopwelle ausgebildeten Lenkspindel-Unterteil verbunden. Zur Verstellung des Lenkrades in Richtung der Lenkspindelachse wird das Lenkspindel-Oberteil zusammen mit der Hülse in einem Führungskörper verschoben. Die Hülse im Führungskörper ist durch einen in einem Längsspalt des Führungskörpers eingreifenden Keil gesperrt, so daß die Hülse gegen Drehen gesichert ist. Bei einem Verschwenken des Lenkspindel-Oberteils um eine horizontale Querachse läßt sich der Führungskörper in einem Lager drehen, was einem Schwenken der Hülse und damit des Lenkwellen-Oberteils gleichkommt. Um die Hülse im Führungskörper in der gewünschten Höhe und im Lager in der gewünschten Schwenkstellung festhalten zu können, dient eine den Führungskörper undrehbar durchdringende Schraube mit einer Spannmutter. Bei der bekannten Lenkeinrichtung bleibt die Schwenkachse in der Höhe gleich, jedoch ändert sich der Abstand des Kreuzgelenk-Mittelpunktes und des Lenkrades zur Schwenkachse. Es verbleibt bei langem Auszug wenig und bei kleinem Auszug viel Winkelverstellung, was für die bedienungsgerechte Anordnung nachteilig ist. Außerdem besteht die Forderung, daß die Kreuzgelenk-Mitte in der Nähe der Schwenkachse liegen soll, damit beim Schwenken kein Einbauraum verlorengeht. Ein derartiger Versatz der Kreuzgelenk-Mitte zur Schwenkachse verursacht Betätigungskraftschwankungen durch die Ungleichförmigkeit des Beugewinkels am oberen Kreuzgelenk.

Die aus der WO 90/05082 bekannte Lenksäulenverstelleinrichtung zeichnet sich durch Befestigungsbleche aus, die durch zwei zusammenwirkende Kolben gegen das Gehäuse gedrückt werden und durch die entstehen Reibkraft die Verstelleinrichtung fixieren. Aus der EP 0 671 308 A1, die dem Oberbegriff des Anspruchs 1 entspricht, ist eine verschieb- und kippbare Lenkeinrichtung bekanntgeworden, die über zwei Zylinder auf einen Hebel wirkt, der mit Hilfe von Lamellenpaketen die Lenkeinrichtung in ihrer Lage fixiert. Die in der US 3,504,569 beanspruchte Lenksäulenbefestigung zeichnet sich dadurch aus, daß eine Reibungsbremse zwischen zwei Lenksäulenteilen angeordnet ist, die mit Hilfe einer druckluftbetätigten Kolben-Zylinder-Einheit gegen die Kraft einer Feder wirkt und bei Ausfall der pneumatischen Unterstützung des Kolbens die Reibungsbremse schließt.

Die Anforderungen an die Gestaltung des Fahrerarbeitsplatzes sind in den letzten Jahren erheblich angestiegen. Eine wichtige Rolle spielt die ergonomisch richtige Position des Lenkrades. Bei Schichtbetrieb kommt der einfachen und leichten Bedienung der Verstelleinrichtung für die Lenksäule eine wesentliche Bedeutung zu. Es ist darauf zu achten, daß Fahrerinnen und Fahrer unterschiedlicher Größe und Körperkraft auf demselben Fahrzeug zum Einsatz kommen.

Der Erfindung liegt die Aufgabe zugrunde, eine Lenkeinrichtung zu finden, deren Lenksäule bei geringstem Kraftaufwand in der Höhe und Neigung einstellbar ist.

Diese Aufgabe ist nach der Erfindung im wesentlichen dadurch gelöst, daß an der Lenksäule zwei Führungsbleche befestigt sind, die an einem mit dem Fahrzeug verbundenen Lagerbock mit der Lenksäule um eine horizontale Achse schwenkbar gehalten sind. Die Seitenwände des Lagerbocks umgreifen die Führungsbleche und haben an ihrem unteren Ende Längsschlitze und die Führungsbleche korrespondierende Querschlitze, durch welche ein Spannelement greift. Dieses Spannelement beinhaltet eine eine Spreizkraft aufbringende Feder, die über einen Konusring auf Klemmkörper drückt, die wiederum eine Spannbuchse und einen an einem Kolben gebildeten Fortsatz gegen die Führungsbleche und die Seitenwände des Lagerbocks auseinanderspreizen.
Durch die Beaufschlagung des Kolbens mit Druck können die Klemmkörper für eine Neueinstellung der Lenkeinrichtung entspannt werden.
Durch die über einen Konusring und Klemmkörper erfolgende Verstärkung der durch die Feder aufgebrachten Kraft kann das gesamte Bauteil geringer dimensioniert werden.

Weitere Ausführungsformen und Merkmale der Erfindung sind in den Unteransprüchen angegeben.

Die Erfindung ist nachfolgend anhand von mehreren Ausführungsbeispielen näher erläutert.
Es zeigen:
- Fig. 1: die Lenkeinrichtung in Seitenansicht;
- Fig. 2: den zugehörigen Längsschnitt bei weggelassener Teleskopwelle;
- Fig. 3: einen vergrößerten Teilschnitt nach der Linie III-III in Fig. 2 durch ein Wälzlager;
- Fig. 4: das Spannelement in vergrößerter Darstellung;
- Fig. 5: eine Seitenansicht durch eine weitere Ausführungsform;
- Fig. 6: den zugehörigen Längsschnitt bei weggelassener Teleskopwelle und
- Fig. 7 und 8: die Ausführungsform nach Fig. 5 mit Wälzlager.

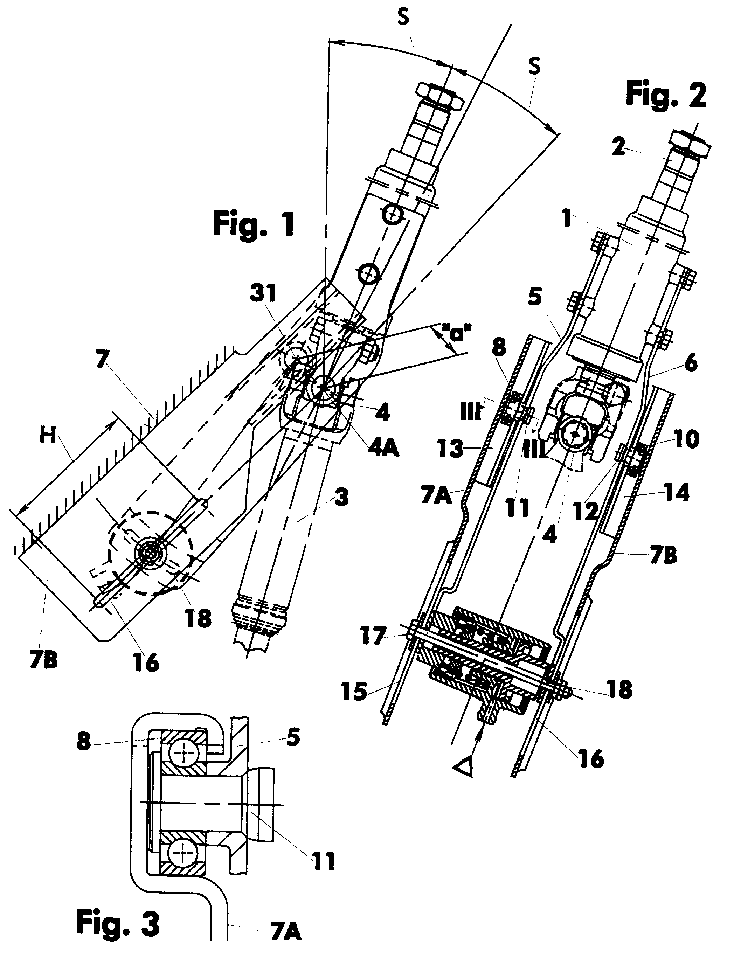

Die Lenkeinrichtung ist in Fig. 1 und 2 ohne Lenkrad und Lenkgetriebe gezeichnet. Das Lenkrad ist auf einen Stummel 2 der Lenksäule 1 aufgeschraubt. Eine Teleskopwelle 3 steht über ein oberes Kreuzgelenk 4 mit der Lenksäule 1 und ein nicht gezeichnetes unteres Kreuzgelenk mit dem Lenkgetriebe in Verbindung.

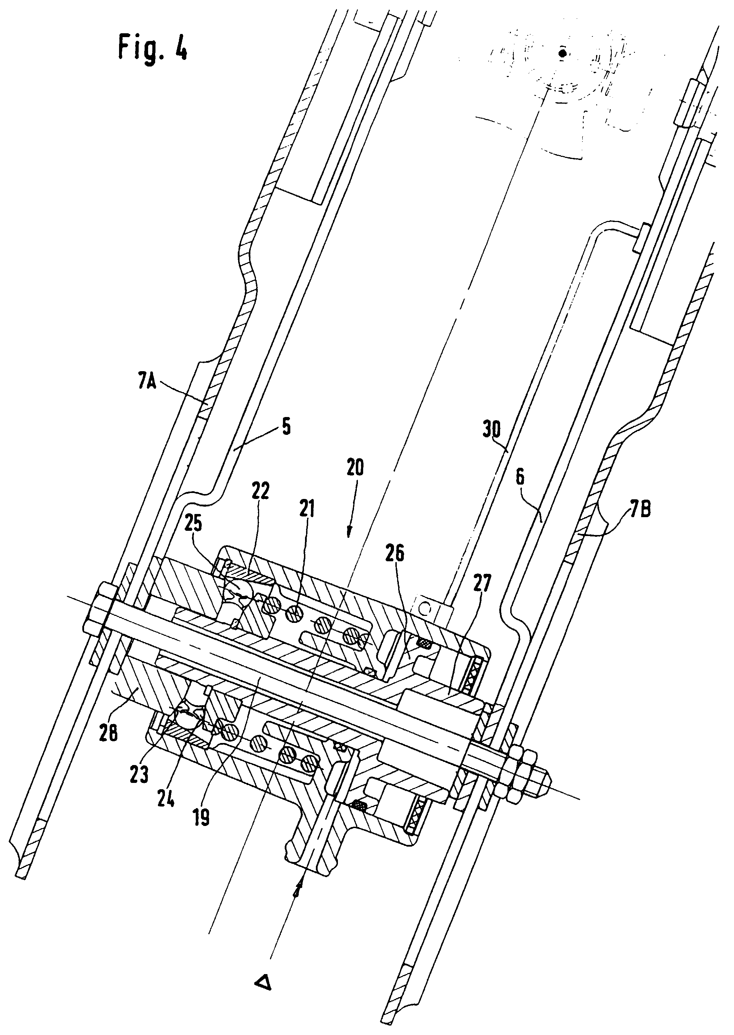

An der Lenksäule 1 sind zwei Führungsbleche 5 und 6 befestigt. Ein U-förmig gebogener Lagerbock 7 mit zwei Seitenwänden 7A, 7B umgreift die Führungsbleche 5, 6. Der Lagerbock 7 ist mit einer nicht dargestellten Fahrerkabine verschraubt. Wälzlager 8 und 10 sind mit Bolzen 11 bzw. 12 in den Führungsblechen 5 bzw. 6 befestigt und greifen in U-förmige Führungsschienen 13 bzw. 14 ein, die an die Seitenwände 7A und 7B angeformt sind. Die Fig. 3 zeigt die Form der Führungsschiene 7A im Schnitt, in welcher die Wälzlager 8 und 10 mit ihren Außenringen abrollen. Die Führungsschienen 13, 14 vermitteln den zugehörigen Wälzlagern 8 bzw. 10 quer zur Bewegungsrichtung eine definierte Anlage. Die Seitenwände 7A und 7B des Lagerbocks 7 sind für die Axialverschiebung der Lenksäule 1 mit Längsschlitzen 15 und 16 und die Führungsbleche 5 und 6 für die Neigungsverstellung mit Querschlitzen 17 und 18 versehen. Mittels eines auf einer Schraube 19 angeordneten Spannelements 20 nach Fig. 4 läßt sich die Lenkeinrichtung in der gewünschten Stellung festlegen. Die Spreizkraft liefert eine starke Druckfeder 21, die über einen Konusring 22 und Schrägflächen 23, 24 verstärkt wird und über eingespannte Klemmkörper 25 auf die Führungsbleche 5, 6 und die Seitenwände 7A, 7B des Lagerbockes 7 einwirkt. Ein Kolben 26 mit einem Fortsatz 27 sowie eine Spannbuchse 28 übertragen dabei die Spreizkraft. Will man die Lenkradposition ändern, dann wird die Vorspannkraft der Druckfeder 21 mit Hilfe des druckluftbetätigten Kolbens 26 intern abgestützt. Dabei wird die Druckfeder 21 zusammengedrückt und der Konusring 22 gibt die Klemmkörper 25 frei. Die Klemmkörper 25 üben jetzt keine Spreizkraft mehr auf die Schrägflächen 23 und 24 sowie die Spannbuchse 28 bzw. den Fortsatz 27 aus. Als Folge davon sind die Führungsbleche 5, 6 nicht mehr gegen den Lagerbock 7 vorgespannt. Das Gehäuse des Spannelements 20 ist durch eine Stange 30 gegen Drehen gesichert. Eine horizontale Achse 31, auf der die Bolzen 11, 12 mit den Kugellagern 8, 10 gelagert sind, liegt in einem bestimmten Abstand "a" zu einem Kreuzgelenk-Mittelpunkt 4A des Kreuzgelenks 4 (Fig. 1 und 2). Rüstet man für den Fahrzeugeinbau die Lenkeinrichtung mit einer Kugelgelenkwelle mit integrierter Gasdruckfeder (DE 195 38 303.6) aus, dann schwenkt durch die Kraft der Gasdruckfeder die Lenksäule und damit das Lenkrad bei gelöstem Spannelement 20 vom Fahrer weg. Damit wird für das Ein- und Aussteigen ein optimaler Freiraum geschaffen.

Durch die Querschlitze 17, 18 in den Führungsblechen 5, 6 läßt sich die Lenkeinrichtung in der Neigung um die Schwenkachse 31 und durch die Längsschlitze 15, 16 in der Höhe verstellen. Dabei erleichtern die Wälzlager 8, 10 in den Führungsschienen 13 bzw. 14 das leichte Herausziehen und Einschieben der Lenksäule 1.

In den Zeichnungen ist mit H der Höhenverstellweg und mit S der Schwenkwinkel bezeichnet.

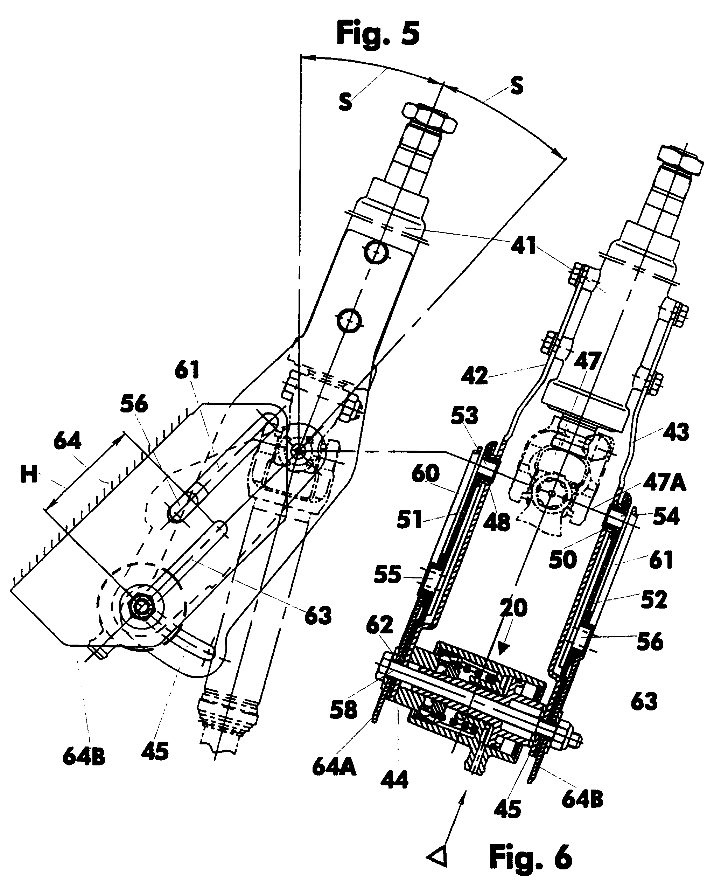

Die Fig. 5 und 6 zeigen eine dreiteilige Ausführungsform mit folgenden Baumerkmalen:
An der Lenksäule 41 sind wiederum zwei innere Führungsbleche 42 und 43 befestigt. Diese Führungsbleche 42 und 43 weisen auf jeder Seite je einen Querschlitz 44 und 45 auf. Die Querschlitze 44 und 45 ermöglichen die Einstellung des gewünschten Neigungswinkels. Im Bereich des Mittelpunktes des Kreuzgelenks 47 weisen die Führungsbleche 42 und 43 jeweils eine Bohrung 48 und 50 auf. Die Bohrungs-Mittelpunkte der Bohrungen 48 und 50 liegen auf derselben Achse wie die Radius-Mittelpunkte der Querschlitze 44 und 45. Im Gegensatz zu der Ausführung nach Fig. 1 und 2 weist diese Lenkeinrichtung zwei weitere Führungsbleche 51 und 52 auf, die in ihrem oberen Ende über jeweils einen Bolzen 53 und 54 an das innere Führungsblech 42 bzw. 43 angelenkt sind. Die Bolzen 53 und 54 liegen auf einer Achse 47A, die durch den Kreuz-Mittelpunkt des Kreuzgelenks 47 hindurchgeht. Die Bolzen 53 und 54 bilden die Schwenkachse für die äußeren Führungsbleche 51 und 52. Dadurch, daß die äußeren Führungsbleche 51, 52 um dieselbe Achse 47A wie das Kreuzgelenk schwenkbar sind, ergibt sich eine besonders leichtgängige Schwenkbarkeit der Lenksäule 41. Diese äußeren Führungsbleche 51 und 52 sind über die Bolzen 55 und 56 sowie eine Schraube 58 des Spannelements 20 in Längsschlitzen 60, 61 und 62, 63 im Lagerbock 64 mit den Seitenwänden 64A bzw. 64B verschiebbar gelagert (Höhenverstellung). Die Längsschlitze 62 und 63 dienen gleichzeitig zur Aufnahme des Spannelements 20, das in der weiter oben beschriebenen Weise mit Druckluft arbeitet.

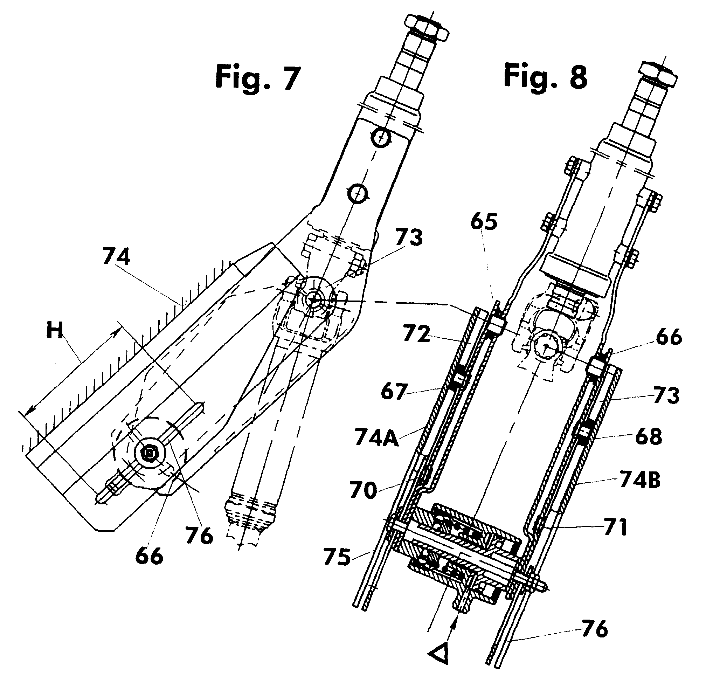

Eine weitere Ausführungsform der höhenverstell- und schwenkbaren Lenksäule ist in den Fig. 7 und 8 beschrieben. Ausgehend von den Fig. 5 und 6 sind die äußeren Führungsbleche 65, 66 über Wälzlager 67, 68 und 70, 71 in zwei U-förmigen Führungsschienen 72, 73 des Lagerbocks 74 axial verschieblich gelagert. Zusätzlich zu den U-förmigen Führungsschienen 72, 73 weisen die Seitenwände 74A und 74B des Lagerbocks 74 zwei Längsschlitze 75, 76 auf, die parallel zu den Führungsschienen 72, 73 verlaufen. Diese Längsschlitze 75, 76 dienen der Aufnahme des Spannelements 20.

### Bezugszeichen

- 1: Lenksäule
- 2: Stummel
- 3: Teleskopwelle
- 4: oberes Kreuzgelenk
- 4A: Kreuzgelenk-Mittelpunkt
- 5: Führungsblech
- 6: Führungsblech
- 7: Lagerbock
- 7A: Seitenwand
- 7B: 7B Seitenwand
- 8: Wälzlager
- 9: -
- 10: Wälzlager
- 11: Bolzen
- 12: Bolzen
- 13: Führungsschiene
- 14: Führungsschiene
- 15: Längsschlitz
- 16: Längsschlitz
- 17: Querschlitz
- 18: Querschlitz
- 19: Schraube
- 20: Spannelement
- 21: Druckfeder
- 22: Konusring
- 23: Schrägfläche
- 24: Schrägfläche
- 25: Klemmkörper
- 26: Kolben
- 27: Fortsatz
- 28: Spannbuchse
- 29: -
- 30: Stange
- 31: Schwenkachse (horizontale Achse)

- 41: Lenksäule
- 42: Führungsblech
- 43: Führungsblech
- 44: Querschlitz
- 45: Querschlitz
- 46: -
- 47: Kreuzgelenk
- 47A: Achse
- 48: Bohrung
- 49: -
- 50: Bohrung
- 51: äußeres Führungsblech
- 52: äußeres Führungsblech
- 53: Bolzen
- 54: Bolzen
- 55: Bolzen
- 56: Bolzen
- 57: -
- 58: Schraube
- 59: -
- 60: Längsschlitz
- 61: Längsschlitz
- 62: Längsschlitz
- 63: Längsschlitz
- 64: Lagerbock
- 64A: Seitenwände
- 64B: Seitenwände
- 65: Führungsbleche
- 66: Führungsbleche
- 67: Wälzlager
- 68: Wälzlager
- 69: -
- 70: Wälzlager
- 71: Wälzlagaer
- 72: Führungsschiene
- 73: Führungsschiene
- 74: Lagerbock
- 74A: Seitenwände
- 74B: Seitenwände
- 75: Längsschlitz
- 76: Längsschlitz

- "a": Abstand
- H: Höhenverstellweg
- s: Schwenkwinkel

## Patentansprüche

1. Lenkeinrichtung zur vertikalen und axialen Einstellung der Lage des Lenkrades in einem Kraftfahrzeug, mit einer Lenkspindel, die an einem fahrzeugfesten Teil axial verschiebbar und über eine horizontale Achse schwenkbar gelagert sowie über ein Spannelement in der gewünschten Position festklemmbar ist, mit folgenden Merkmalen:
a) an der Lenksäule (1) sind zwei Führungsbleche (5, 6) befestigt, die an einem Lagerbock(7) mit der Lenksäule (1) um die horizontale Achse (31) schwenkbar gehalten sind;
b) der Lagerbock (7) hat die Form eines U-förmig gebogenen Bleches mit zwei Seitenwänden (7A, 7B);
c) die Seitenwände (7A, 7B) des Lagerbocks (7) umgreifen die Führungsbleche (5, 6) und haben an ihrem unteren Ende Längsschlitze (15, 16) und die Führungsbleche korrespondierende Querschlitze (17, 18), durch welche ein Spannelement (20) greift;
dadurch **gekennzeichnet**, daß
- das Spannelement (20) auf einer Schraube angeordnet ist und eine eine Spreizkraft aufbringende Feder (21) umfasst;
- die Feder (21) über einen Konusring (22) auf Klemmkörper (25) drückt;
- die Klemmkörper (25) eine Spannbuchse (28) und einen an einem Kolben (26) gebildeten Fortsatz (27) gegen die Führungsbleche (5, 6) und die Seitenwände (7A, 7B) auseinanderspreizen;
- durch Beaufschlagen des Kolbens (26) die Klemmkörper (25) für eine Neueinstellung der Lenkeinrichtung entspannt werden.

2. Lenkeinrichtung nach Anspruch 1, **gekennzeichnet** durch folgende Merkmale:
a) zwischen dem Lagerbock (64) und den an der Lenksäule (41) festen Führungsblechen (42, 43) sind zwei weitere äußere Führungsbleche (51, 52) angeordnet;
b) die äußeren Führungsbleche (51, 52) sind schwenkbar um eine Achse (47A), die im Kreuzungs-Mittelpunkt einer Kreuzgelenkwelle (47) liegt;
c) die Achse (47A) bildet zugleich die Achse der Radius-Mittelpunkte der Querschlitze (44, 45) in den Führungsblechen (42, 43);
d) an den äußeren Führungsblechen (51, 52) sind in Längsschlitzen (60, 61) der Seitenwände (64A, 64B) des Lagerbocks (64) eingreifende Bolzen (55, 56) vorgesehen und
e) die Längsschlitze (60, 61) liegen parallel, aber versetzt zu den Länqsschlitzen (62, 63) im Lagerbock (64).

3. Lenkeinrichtung nach Anspruch 1, **gekennzeichnet** durch folgende Merkmale:
a) auf der horizontalen Achse (31) sind in den Führungsblechen (5, 6) Wälzlager (8, 10) gelagert, die zur leichteren Längsverschieblichkeit in Führungsschienen (13, 14) der Seitenwände (7A, 7B) des Lagerbocks (7) abrollen und
b) die horizontale Achse (31) hat einen bestimmten Abstand ("a") von einem Kreuzgelenk-Mittelpunkt (4A) des Kreuzgelenks (4).

4. Lenkeinrichtung nach Anspruch 2, **gekennzeichnet** durch folgende Merkmale:
a) Bolzen (53, 54) liegen auf einer Achse (47A), die durch den Kreuzungs-Mittelpunkt des Kreuzgelenks (47) hindurchgeht und
b) Bolzen (53, 54) liegen in derselben Achse (47A) wie die Radius-Mittelpunkte der Querschlitze (44, 45).

5. Lenkeinrichtung nach Anspruch 1, dadurch **gekennzeichnet**, daß der Kolben (26) des Spannelements (20) pneumatisch betätigbar ist.

6. Lenkeinrichtung nach Anspruch 2, **gekennzeichnet** durch folgendes Merkmal:
die äußeren Führungsbleche (65, 66) sind über Wälzlager (67, 68 bzw. 70, 71) in Führungsschienen (72, 73) des Lagerbocks (74) axial verschiebbar gelagert.

7. Lenkeinrichtung nach Anspruch 1, dadurch **gekennzeichnet**, daß der Lagerbock (7) als Tiefziehteil ausgeführt ist.

8. Lenkeinrichtung nach den Ansprüchen 1 und 2, dadurch **gekennzeichnet**, daß in einer Teleskopwelle (3) eine Gasdruckfeder eingebaut ist.

## Claims

1. Steering system for vertical and axial adjustment of steering-wheel position in a vehicle, with a steering spindle, which on a vehicle-stationary part is axially displaceable, pivotable on a horizontal axis, and can be arrested in a desired position by means of a clamping element, having the following features:
a) On the steering column (1) two guide plates (5, 6) are mounted and held on a bearing block (7) with the steering column (1) so as to pivot about a horizontal axis (31);
b) the bearing block (7) has the form of a u-shaped metal sheet with two side walls (7A, 7B);
c) the side walls (7A, 7B) of the bearing block embrace the guide plates (5, 6) and have at their lower ends longitudinal slots (15, 16), and the guide plates have corresponding transverse slots (17, 18) through which a clamping element (20) engages;
**characterized** in that the clamping element (20) is arranged on a screw and embraces a spring exerting a spreading force (21);
the spring (21) via a tapered ring (22) exerts pressure on shims (25);
the shims (25) spread a clamping bush (28) and an extension (27) on a piston (26) against the guide plates (5, 6) and the side walls (7A, 7B);
through actuation of the piston (26), the shims (26) are stress-relieved for re-adjustment of the steering direction.

2. Steering system according to Claim 1, **characterized** by the following features:
a) between the bearing block (64) and the guide plates (42, 43) fixed to the steering column (41), two additional external guide plates (51, 52) are arranged;
b) the external guide plates (51, 52) are pivotable about an axis (47A) located in the center of intersection of a universal joint shaft (47);
c) the axis (47A) at the same time is the axis of the radius centers of the transverse slots (44, 45) in the guide plates (42, 43);
d) on the external guide plates (51, 52), bolts (55, 56) are arranged engaging in longitudinal slots (60, 61) of the side walls (64A, 64B) of the bearing block (64); and
e) the longitudinal slots (60, 61) are arranged in parallel but offset to the longitudinal slots (62, 63 ) in the bearing block (64).

3. Steering system according to Claiml, **characterized** by the following features:
a) on the horizontal axis (31), in the guide plates (5,6),there are roller bearings (8, 10), which for easy longitudinal displacement roll in guide rails (13, 14) of the side walls (7A, 7B) of the bearing block (7); and
b) the horizontal axis (31) has a specific distance ('a') from a universal joint center (4A) of the universal joint (4).

4. Steering system according to Claim 2, **characterized** by the following features:
a) bolts (53, 54) are arranged on an axis (47A) passing through the center of intersection of the universal joint; and
b) bolts are arranged in the same axis (47A) as the radius centers of the transverse slots (44, 45).

5. Steering system according to Claim 1, **characterized** in that the piston (26) of the clamping element (20) can be pneumatically actuated.

6. Steering system according to Claim 2, **characterized** by the following feature:
the external guide plates (65, 66), via roller bearings (67, 68 or 70, 71) in guide rails (72, 73) of the bearing block (74), are axially displaceable.

7. Steering system according to Claim 1, **characterized** in that the bearing block (7) is a deep-drawn part.

8. Steering system according to Claims 1 and 2,
**characterized** in that a gas compression spring is installed in a telescopic shaft.

## Revendications

1. Mécanisme de direction pour le réglage vertical et axial de la position du volant dans un véhicule automobile comportant un arbre de direction logé de façon à pouvoir coulisser dans le sens axial sur une partie solidaire du véhicule et pivotant sur un axe horizontal et pouvant être bloqué par un élément de serrage dans la position souhaitée, présentant les caractéristiques suivantes :
a) sur la colonne de direction (1) sont fixées deux tôles de guidage (5, 6) maintenues à un support de palier (7) de façon à pouvoir pivoter avec la colonne de direction (1) autour de l'axe horizontal (31);
b) le support de palier (7) a la forme d'une tôle courbée en "U" avec deux parois latérales (7A, 7B);
c) les parois latérales (7A, 7B) du support de palier (7) entourent les tôles de guidage (5, 6) et comportent, à leur extrémité inférieure, des fentes longitudinales (15, 16) et les tôles de guidage comportent des fentes transversales (17, 18) correspondantes par lesquelles passe un élément de serrage (20);
**caractérisé** en ce que
- l'élément de serrage (20) est disposé sur une vis et entoure un ressort (21) produisant une force d'écartement;
- le ressort (21) appuie par l'intermédiaire d'une bague conique (22) sur des corps de serrage (25);
- les corps de serrage (25) écartent une douille de serrage (28) et un prolongement (27) d'un piston (26) contre les tôles de guidage (5, 6) et les parois latérales (7A, 7B);
- par la mise sous pression du piston (26), les corps de serrage (25) sont desserrés pour un nouveau réglage du mécanisme de direction.

2. Mécanisme de direction selon la revendication 1, **caractérisé** par les caractéristiques suivantes :
a) entre le support de palier (64) et les tôles de guidage (42, 43) fixées à la colonne de direction (41) sont agencées deux autres tôles de guidage externes (51, 52);
b) les tôles de guidage externes (51, 52) peuvent pivoter autour d'un axe (47A) se trouvant au point central de croisement d'un arbre de transmission à joints de cardan (47);
c) l'axe (47A) forme en même temps l'axe des centres des rayons des fentes transversales (44, 45) dans les tôles de guidage (42, 43);
d) sur les tôles de guidage externes (51, 52) sont prévues des goupilles (55, 56) s'engageant dans des fentes longitudinales (60, 61) des parois latérales (64A, 64B) du support de palier (64);
e) les fentes longitudinales (60, 61) sont parallèles, mais décalées par rapport aux fentes longitudinales (62, 63) dans le support de palier (64).

3. Mécanisme de direction selon la revendication 1, **caractérisé** par les caractéristiques suivantes :
a) sur l'axe horizontal (31), des paliers à roulement (8, 10) sont logés dans les tôles de guidage (5, 6) et se déroulent dans des rails de guidage (13, 14) des parois latérales (7A, 7B) du support de palier (7) pour assurer un meilleur coulissement longitudinal, et
b) l'axe horizontal (31) est à une certaine distance ("a") d'un point central (4A) du joint de cardan (4).

4. Mécanisme de direction selon la revendication 2, **caractérisé** par les caractéristiques suivantes :
a) des goupilles (53, 54) se trouvent sur un axe (47A) passant par le point central de croisement du joint de cardan (47), et
b) des goupilles (53, 54) se trouvent dans le même axe (47A) que les centres des rayons des fentes transversales (44, 45).

5. Mécanisme de direction selon la revendication 1, **caractérisé** en ce que le piston (26) de l'élément de serrage (20) peut être actionné de façon pneumatique.

6. Mécanisme de direction selon la revendication 2, **caractérisé** par la caractéristique suivante :
les tôles de guidage externes (65, 66) sont logées, par l'intermédiaire de paliers à roulement (67, 68, respectivement 70, 71), de façon à pouvoir coulisser axialement dans des rails de guidage (72, 73) du support de palier (74).

7. Mécanisme de direction selon la revendication 1, **caractérisé** en ce que le support de palier (7) est réalisé comme une pièce emboutie.

8. Mécanisme de direction selon les revendications 1 et 2, **caractérisé** en ce que, dans un arbre télescopique (3), est monté un ressort pression de gaz.
